# EUROPEAN PATENT SPECIFICATION

(11) **EP 1 868 341 B1**
(45) Date of publication and mention of the grant of the patent: **19.08.2009**
(21) Application number: 06741742.8
(22) Date of filing: 27.04.2006
(51) Int. Cl.: H04L 29/06

(54) **A METHOD AND SYSTEM FOR DETERMINING THE CENTRAL CONTROLLING SERVER**
VERFAHREN UND SYSTEM ZUR ENTSCHEIDUNG DES ZENTRALEN KONTROLLSERVERS
PROCÉDÉ ET SYSTÈME DE DÉTERMINATION DU SERVEUR DE CONTRÔLE CENTRAL

(30) Priority: 27.04.2005 CN 200510068223
(43) Date of publication of application: 19.12.2007
(73) Proprietor: Huawei Technologies Co., Ltd., Longgang District Shenzhen Guangdong 518129 (CN)
(72) Inventor: LUO, Long, 518129 Shenzhen Guangdong (CN)
(74) Representative: Manitz, Finsterwald & Partner GbR
(86) International application number: PCT/CN2006/000821
(87) International publication number: WO 2006/114059

(56) References cited:
- WO-A-20/06083070
- CN-A- 1 372 405
- KR-A- 20060 035 552
- US-A1- 2002 133 611
- US-A1- 2003 153 342
- US-B1- 6 249 800
- US-B1- 6 477 150
- OPEN MOBILE ALLIANCE (OMA): "OMA POC CONTROL PLANE CANDIDATE VERSION 1.0 - 17 MARCH 2005 OPEN MOBILE ALLIANCE OMA-TS-POC-CONTROLPLANE-V1 0-20050317-C" INTERNET CITATION, [Online] 17 March 2005 (2005-03-17), pages 1-267, XP007900825 Retrieved from the Internet: URL:http://www.openmobilealliance.org/rele ase_program/docs/PoC/v1_0-20050 329-C/OMA-TS-PoC-ControlPlane-V1_0-2005031 7-C.pdf> [retrieved on 2005-07-10]
- XU T., LIAO J.: 'Survey of PTT/POC Technology' TELECOM ENGINEERING TECHNOLOGY AND STANDARDIZATION May 2004, XP008094702

## Description

### Field of the Invention

The present invention relates to controlling function in a multiparty service, and more specifically, to a method and system for determining a server performing controlling function.

### Background of the Invention

Push To Talk (PTT) service employs half duplex technology, and may be implemented in Integrated Digital Enhanced Network (iDEN), Terrestrial Trunk Radio System (Tetra), etc. PTT Over Cellular (POC) is a PTT service proposed by the Open Mobile Alliance (OMA) and implemented in the packet network. POC utilizes Voice Over Internet Protocol (VOIP) and half duplex mode to meet the real-time communication requirement of users with a low cost but a high efficiency. The POC service has some unique features. For example, a voice session can be initiated by pressing a dedicated talk button without dialing telephone numbers; a broadcast can be provided, in which one person talks at a time and all other participants listen to the speech; a POC session group may be pre-established or established on demand; the session is in the half duplex mode, i.e. a user is unable to talk and listen at the same time; users keep online, and the time of establishing the session is shorter than that of dialing.

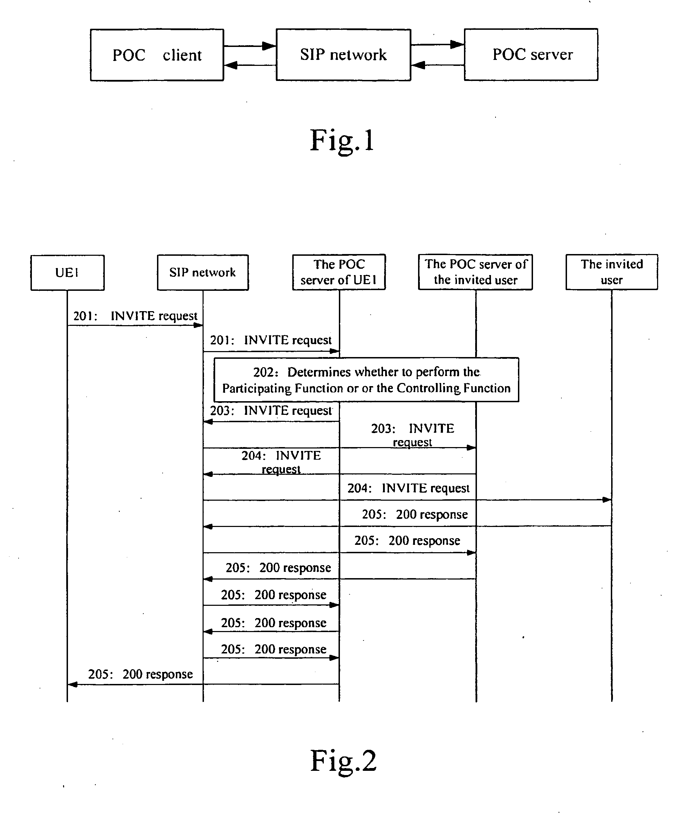

Referring to Figure 1, network architecture of POC proposed by OMA includes one or more POC clients, a Session Initiation Protocol (SIP) network and one or more POC servers. The POC service is implemented between the POC client and the POC server via the SIP protocol based network.

At present, during a POC session, one of the POC servers in the network performs Controlling Function. The POC server performing the Controlling Function provides centralized control functionality. The Controlling Function includes: Real-time Transport protocol (RTP) media distribution, Talk Burst Control (TBC), policy enforcement for participation in Group Sessions and handling of participants information. All POC services need to be sent to the POC server performing the Controlling Function. The POC server performing the Controlling Function distributes the session to each invited user of the session group after performing the Controlling Function. A plurality of POC servers may be involved in a POC session, but only one of these POC servers performs the Controlling Function. All of these POC servers are able to perform Participating Function, and the POC server performing the Controlling Function may perform a Controlling Function and a Participating Function at the same time. A user is able to log in to the POC server performing the Controlling Function via a POC server performing the Participating Function. The Participating Function includes: providing message and POC service relay function between POC Client and POC Server performing Controlling Function, providing management of Simultaneous POC Sessions, such as filtering of the media streams in the case of Simultaneous POC Sessions.

At present, the rules of selection of a POC Server performing Controlling Function during the POC session establishment are listed as follow.

In the case of an on-demand session, such as 1-1 POC session and ad hoc POC group session, the POC server of the inviting user performs the Controlling Function.

In the case of a pre-established session, such as Pre-arranged Group Session and Chat POC Group Session, the POC Server managing the Group Session performs the Controlling Function.

Figure 2 shows a signaling flow for determining a POC server performing Controlling Function in an on-demand session during the POC Session setup in the prior art. As shown in Figure 2, the determination may include the following.

201: User Equipment 1 (UE1) of an inviting POC user initiates a session by sending an upper-layer signaling, e.g. an INVITE request. The INVITE request carries POC addresses of invited POC users and POC address of the inviting POC user. SIP core routes the INVITE request to the POC server of the inviting POC user.

The INVITE request is a standard signaling in the SIP protocol.

202: In response to receiving the INVITE request, the POC server of the inviting POC user determines whether to perform the Participating Function or the Controlling Function.

The POC server determines whether to perform the Participating Function or the Controlling Function by the following.

After receiving the INVITE request, the POC server of UE1 determines whether the Participating Function or the Controlling Function should be performed according to a type of a POC server trigger point provided by the SIP network. If the POC server trigger point is identified as an originated POC service trigger point, the POC server of UE1 performs the Participating Function. If the POC server trigger point is identified as a terminated POC service trigger point, the POC server of UE1 further determines whether the invited user corresponding to the address information of the invited user carried in the INVITE request is accessed via the POC server. If yes, the invited user is accessed via POC server of UE1, the POC server of UE1 performs the Participating Function; otherwise, the POC server of UE1 performs the Controlling Function.

203: In response to performing the Controlling Function, the POC server of UE1 sends the INVITE request to POC servers of the invited users via the SIP network according to the addresses of the invited users carried in the INVITE request.

The INVITE request sent to the POC servers of the invited users carries the address information required for this session, thus the address of the POC server of UE1, i.e. the POC server performing the Controlling Function, is also included.

204: In response to receiving the INVITE request, the POC servers of the invited users send the INVITE request to the respective users via the SIP network.

If the POC server of the invited user determines to take a role of an intermediate node, the POC server of the invited user stores the address information required for this session, in order to initiate a service later. If the POC server of the invited user determines not to take a role of an intermediate node, the invited user stores the address information required for this session, in order to initiate a service later.

205: In response to receiving the INVITE request, each invited user sends a 200 response (OK) message to the UE1 via the SIP network. The session is established successfully after UE1 receives the 200 response message.

However, the solution described above can not meet the requirements of actual applications.

A problem arising in the above solution is that it is difficult to meet the requirement of development of POC services. The existing POC service is limited to the half duplex voice service and the existing POC server also only supports the voice service. Along with the development of POC technology, such services as multimedia will be added in the future POC service. In such a case, if the POC server that is selected to take the role of Controlling Function according to the above solution does not support the service type initiated by a user, the service initiated by the user will be failed. Furthermore, if session attributes are changed during the session and the POC server that is selected to perform Controlling Function according to the above solution does not support new session attributes, the service initiated by the user also will be failed.

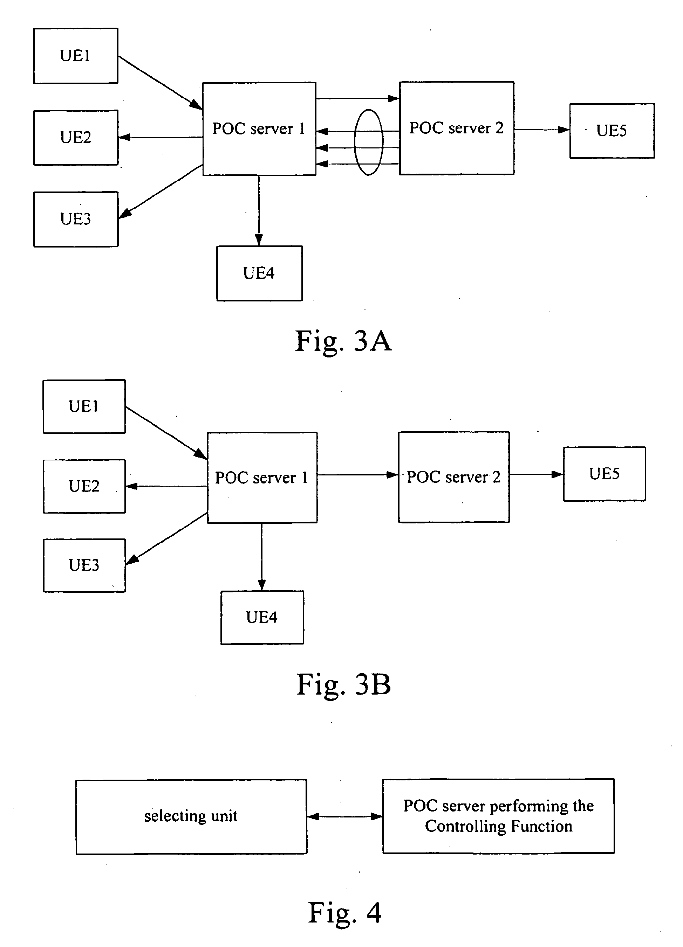

The burden of the system is heavy in some cases, e.g. in the case that the distribution of users is asymmetric. For example, if the POC server that is selected to perform the Controlling Function according to according to the above rule, and users of the service group are less during service communication, the transmission traffic may be increased in the system. For example, referring to Figures 3A and 3B, there is a 1-many ad hoc session initiated by UE5. UE1, UE2, UE3 and UE4 access this session via POC server 1 and UE5 accesses this session via POC server 2. If UE1 wants to send a 100kb voice service to other UEs, the media traffic in the case of selecting POC server 1 to perform the Controlling Function differs from that in case of selecting POC server 2 to perform the Controlling Function. Figure 3A shows the media traffic when POC server 2 (the POC server of UE 5) is selected to perform the Controlling Function according to the above determination rule. Note that, the voice service is routed by the POC server 1 (the POC server of UE 1) to the POC server 2, and POC server 2 sends the100kb voice service to UE 5 directly, and sends the 100kb voice service to UE2, UE3 and UE4 respectively via POC server 1. In this case, the total media traffic in the system is 900kb. Figure 3B shows the media traffic when POC server 1 is selected to perform the Controlling Function. Note that, the determination rule described above is not used for selecting POC server 1 as a POC server performing the Controlling Function here. In this case, POC server 1 receives the 100kb voice service and sends the 100kb voice service to UE2, UE3 and UE4 respectively, and sends the 100kb voice service to UE5 via POC server 2. In this case, the total media traffic in the system is 600kb. As can be seen from a comparison between Figures 3A and 3B, the media traffic of 3B is less than that of 3A by a 300kb between POC server 1 and POC server 2.

Furthermore, the determination rule described above does not utilize network resource reasonably, because the capability of POC server is not taken into consideration. For example, if a POC server is selected to perform the Controlling Function, but the POC server is overloaded, the services provided by the POC server will be affected and even leads to a failure.

US-B1-6 477 150 discloses a system and method for providing group communication services in an existing communication system.

US 2003/153342 A1 discloses a method and apparatus for joining a user to a call in a group communication network.

US 2002/133611 A1 discloses a method and system for receiving communications requests over an electronic network and using a dispatch server to direct the communications requests to a media server that establishes a conference and processes communications thereof.

WO 2006/083070 A (published on August 10, 2006) provides a method and system for determining a server having a controlling function.

### Summary of the Invention

Embodiments of the present invention provide systems, devices and methods to determine a server for performing centralized control functions, in order to select a POC server performing the Controlling Function flexibly according to actual applications, thereby improving the success rate of the service and the performance of the system.

A method for determining a POC server performing Controlling Function, may include:
receiving, by a selecting unit, a session establishment request from a User Equipment (UE); and
selecting, by the selecting unit, one POC server as a POC server performing the Controlling Function from a plurality of POC servers associated with the session establishment request according to session information in the session establishment request, server attributes and selecting rules stored in the selecting unit;
receiving, by the selecting unit, a request for acquiring a POC server performing the Controlling Function from the POC server performing the Controlling Function;
selecting, by the selecting unit, a new POC server performing the Controlling Function from the POC servers associated with the session according to the session information, server attributes and selecting rules stored in the selecting unit;
notifying the new POC server performing the Controlling Function and the POC servers associated with the session that updating is to be performed, and
notifying the original POC server performing the Controlling Function that stopping performing the Controlling Function is to be performed.

A system capable of selecting a POC server performing the Controlling Function, includes:
a selecting unit and POC servers associated with a session; and
the selecting unit is coupled to the POC servers associated with a session, configured to receive a session establishment request from a User Equipment (UE) select one POC server as a POC server performing the Controlling Function from the POC servers associated the session establishment request according to session information in the session establishment request, server attributes and selecting rules stored in the selecting unit, and send the session establishment request to the selected POC server performing the Controlling Function; and
the selecting unit is further configured to receive a request for acquiring a new POC server performing the Controlling Function from the POC server performing the Controlling Function, select the new POC server performing the Controlling Function, notify the new POC server performing the Controlling Function and the POC servers associated with the session requested by the session establishment request that updating is to be performed, and notify the original POC server performing the Controlling Function that stopping performing the Controlling Function is to be performed.

According to the solution provided by the embodiments of the present invention, the UE initiates a session by sending a session establishment request to a selecting unit. The selecting unit selects a server for performing Controlling Function according to session information in the session establishment request, server attributes and selecting rule stored. In accordance with this solution, the POC server for performing Controlling Function can be selected flexibly based on actual applications, thereby improving the service success rate greatly, reducing the media traffic in the system and utilizing the network resource reasonably.

### Brief description of the drawings

Figure 1 is a schematic diagram illustrating a network architecture of POC system in the prior art;
Figure 2 is a signaling flow for determining a POC server performing Controlling Function in an on-demand session during the POC session establishment in the prior art;
Figures 3A and 3B show media traffic in a system when different POC servers are selected to perform Controlling Function;
Figure 4 is a diagram illustrating a system capable of determining a server to perform Controlling Function in accordance with an embodiment of the present invention;
Figure 5 is a flowchart for determining a server performing Controlling Function at a session establishment phase in accordance with an embodiment of the present invention;
Figure 6 is a flowchart illustrating a change from an original POC server performing Controlling Function to a new POC server performing Controlling Function in accordance with an embodiment of the present invention;
Figure 7 is a flowchart illustrating a change from an original POC server performing Controlling Function to a new POC server performing Controlling Function in accordance with another embodiment of the present invention;
Figure 8 is a flowchart illustrating a change from an original POC server performing Controlling Function to a new POC server performing Controlling Function in accordance with another embodiment of the present invention;
Figure 9 is a flowchart illustrating a change from an original POC server performing Controlling Function to a new POC server performing Controlling Function in accordance with another embodiment of the present invention.

### Detailed description of the invention

In one embodiment of the present invention, a UE initiates a session by sending a session establishment request to a selecting unit. After receiving the session establishment request, the selecting unit selects one server from servers associated with this session establishment request to perform Controlling Function.

Figure 4 is a diagram illustrating a system capable of determining a server to perform Controlling Function in accordance with an embodiment of the present invention. As shown in Figure 4, the system may include a selecting unit and a server performing the Controlling Function.

The selecting unit is configured to store attributes of all servers in the system and selecting rules for selecting the server performing the Controlling Function. The selecting unit receives a session establishment request from a UE, selects a server to perform the Controlling Function according to session information in the session establishment request, the server attributes and the selecting rules, and sends the session establishment request to the selected server.

The server performing the Controlling Function is configured to perform the Controlling Function according to the session establishment request or service request sent by the selecting unit.

The server attributes to be stored in the selecting unit may be determined by the operator according to actual applications. For example, the operator may store the attributes of all the servers that are able to provide voice services in the selecting unit.

The selecting unit is a logic module, which may be integrated in a server or exist separately. The selecting unit also may receive information of selecting rule update from external systems such as a service provider.

In accordance with embodiments of the present invention, the server performing the Controlling Function may be determined either at the session establishment phase or during the specific service after the session is established. Furthermore, if the selected server is unable to support the current service during the service, a new server may be selected to perform the Controlling Function.

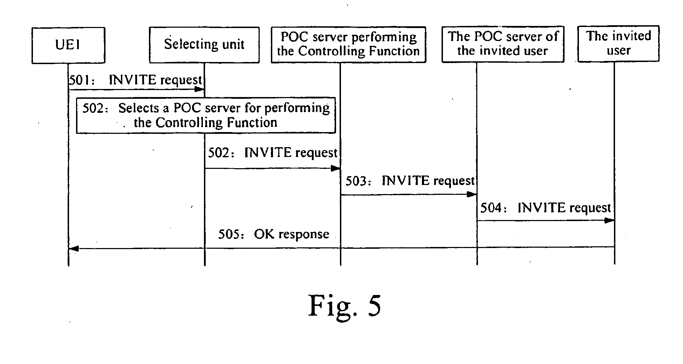

Figure 5 is a flowchart for determining a server performing the Controlling Function at the session establishment phase in accordance with an embodiment of the present invention. As shown in Figure 5, the following steps are included.

501: UE1 initiates a session by sending a session establishment request (INVITE request) to a selecting unit. The INVITE request carries session type, session attributes, a list of identifications of the invited users, etc.

Specifically, the session type in a POC system may be an on-demand session or a pre-established session; the session attributes may include the service type of this session.

The session attributes include the address information associated with this service connection.

The session establishment request may be implemented by using SIP protocol based signaling.

If a session group is an on-demand POC session group, such as a 1-1 session or an ad hoc session group in which the group members are selected on demand, the selecting unit can be configured in POC server of UE1. Specifically, UE1 sends an INVITE request to its home POC core. The POC core sends the INVITE request to the POC server of UE1 according to the address of UE1 and the service type carried in the INVITE request. After receiving the INVITE request, the selecting unit configured in the POC server of UE1 starts to select a POC server for performing Controlling Function.

If the session group is a pre-established POC session group, such as a Prearranged group or Chat group, the selecting unit can be configured in a POC server that is pre-configured to manage the session group information. Specifically, UE1 sends an INVITE request to its home POC core. The POC core sends the INVITE request to the POC server of UE1 according to address of UE1 and service type carried in the INVITE request. After receiving the INVITE request, the POC server of UE1 performs the session service setting procedure, and sends to the POC core the INVITE request carrying a group identity of the POC session group. The POC core sends the INVITE request to the POC server managing the session group information according to the group identity in the INVITE request. After receiving the INVITE request, the selecting unit configured in the POC server managing the session group information starts to select a POC server for performing Controlling Function.

502: In response to receiving the INVITE request, the selecting unit selects a POC server for performing Controlling Function according to selecting rules and server attributes stored as well as session information in the INVITE request, and sends the INVITE request to the POC server selected.

The INVITE request sent to the selecting unit carries an identifier for determining whether the selecting unit receives the INVITE request for the first time. If the selecting unit receives the INVITE request for the first time, the selecting unit selects a POC server for performing Controlling Function.

The selecting rules may include rules that affect the operation of this session.

The rules may be preconfigured by the operator. For example, the operator may designate a POC server to perform the Controlling Function.

The POC server performing the Controlling Function may be selected according to the load of POC servers. In this case, the highest load of each server needs to be preconfigured. For a POC server, if the load of this POC server is less than the highest load preconfigured, the POC server is able to be selected. If there is a plurality of POC servers that are able to be selected, a POC server with the minimum load currently may be selected to perform the Controlling Function.

The POC server performing the Controlling Function also may be selected according to service types that the POC server can support. In this case, the service types that can be supported the servers are pre-stored. Along with the development of POC technology, in a POC system, different types of POC services may be processed by different POC servers, thus the selecting unit selects a POC server for performing the Controlling Function from the POC servers supporting the service type according to the POC service type in the INVITE request.

The POC server performing the Controlling Function also may be selected according to distribution of the users involved in this session. In the case that the distribution of the users is asymmetric, the POC server logged in to by the most users in this session may be selected as the POC server performing the Controlling Function, in order to reduce the media traffic and save the system resource.

In actual applications, the selecting unit may select a POC server to perform the Controlling Function according to any one or any combination of the above rules. In addition, the selecting unit may update the selecting rules according to such information provided by the network as congestion condition, configurations determined by the operator and/or a change of the network structure.

503: In response to receiving the INVITE request, the POC server performing the Controlling Function performs the Controlling Function, and sends to the invited users the INVITE request according to the list of the identifications of the invited users. The INVITE request carries address information of this session and instruction information from the POC server performing the Controlling Function.

The instruction information from the POC server performing the Controlling Function may include address information of the POC servers.

If the session group is a pre-established POC session group, after receiving the session establishment request, the POC server performing the Controlling Function should obtain group information of this pre-established POC session group, and then performs the Controlling Function. The group information includes user information of the users in this session group and is stored in the POC server managing the session group or stored in a dedicated database. The POC server performing the Controlling Function may obtain the group information by several ways.

If the group information is stored in the POC server managing the session group, and the selecting unit is configured in the POC server performing the Controlling Function, i.e. the POC server managing the session group, the POC server performing the Controlling Function searches out the group information in it according to the session group identifier directly.

If the POC server where the selecting unit is located, i.e. the POC server managing the session group, is not the POC server performing the Controlling Function, the selecting unit searches out the group information in the POC server managing the session group or obtains the group information corresponding to the group identifier from the dedicated database before sending the INVITE request, and sends to the POC server performing the Controlling Function the INVITE request carrying the session group information.

If the POC server where the selecting unit is located, i.e. the POC server managing the session group, is not the POC server performing the Controlling Function, after receiving the INVITE request, the POC server performing the Controlling Function sends to the POC server managing the session group or the dedicated database a search message carrying the session group identifier. The POC server managing the group session or the dedicated database searches out the group information corresponding to the group identifier in them after receiving the search message, and returns the group information to the POC server performing the Controlling Function.

504: In response to receiving the INVITE request, the POC server of the invited user sends the INVITE request to the invited user according to the identification of the invited user.

The INVITE request sent by the POC server performing the Controlling Function is routed to the POC server of the invited user and then to the invited user by such transmission networks as an SIP network.

In response to receiving the INVITE request, the POC server of the invited user stores the address information involved in this session and the instruction information from the POC server performing the Controlling Function for a session later.

505: The invited user returns a session establishment response to the inviting user via the POC server of the invited user, the POC server performing the Controlling Function and the POC server of the inviting user. After the inviting user receives the session establishment response, the session is established successfully.

The session establishment response carries the address information involved in this session.

After the session is established, the group members of the session group can share the service. If the session group is a pre-established POC session group and the POC server where the selecting unit is located differs from the POC server performing the Controlling Function, after the session is established, the POC server where the selecting unit is located may act as a relay server that relays signaling or media data between the POC server performing the Controlling Function and the POC servers logged in to by other users in this session.

For reducing the session establishment time, another embodiment is also proposed.

As can be seen from the above embodiment, the POC server performing the Controlling Function may be selected at session establishment phase according to the selecting rules. In this embodiment, a preferred POC server may be selected according to several aspects associated with the current session, such as the service attributes of this session, the current network condition, media traffic in the system. The method of flexibly selecting the POC server performing the Controlling Function according to actual applications improves the service success rate greatly, reduces the media traffic in the system and reasonably utilizes the network resource.

The POC server where the selecting unit is located may act as the POC server performing the Controlling Function, or may differ from the POC server performing the Controlling Function. Similarly, the POC server of an invited user may act as the POC server performing the Controlling Function, or may differ from the POC server performing the Controlling Function.

Further, in some cases, the original POC server performing the Controlling Function may send to the selecting unit a request message for acquiring a new POC server performing the Controlling Function. The cases may include:
1. A change of the service attributes that causes the original POC server performing the Controlling Function to be unable to support the service;
2. overload of the original POC server performing the Controlling Function that causes the original POC server performing the Controlling Function to be unable to support the service; and/or
3. A command from an operator for changing the POC server performing the Controlling Function.

When one or more cases discussed above occur, a maintenance network or the operator may, directly or via the selecting unit, notify the original POC server performing the Controlling Function to change.

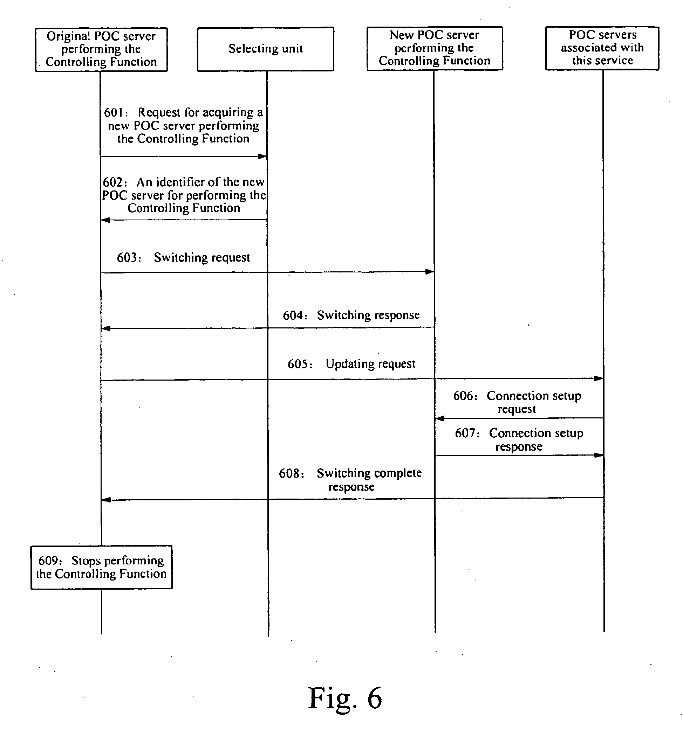

Figure 6 is a flowchart illustrating a change from an original POC server performing the Controlling Function to a new POC server performing the Controlling Function in accordance with an embodiment of the present invention.

601: The original POC server performing the Controlling Function sends to the selecting unit a request message for acquiring a new POC server performing the Controlling Function. The request message carries the session type and the session attributes.

602: In response to receiving the request message for acquiring a new POC server performing the Controlling Function, the selecting unit selects a new POC server performing the Controlling Function according to selecting rules and server attributes stored as well as session information in the request message, and sends an identifier of the new POC server performing the Controlling Function to the original POC server performing the Controlling Function described in 601.

If the selecting rules include the user distribution, the POC server logged in to by the most users in this session is selected as the POC server performing the Controlling Function.

603: In response to receiving the identifier of the new POC server performing the Controlling Function, the original POC server performing the Controlling Function sends a switching request to the new POC server performing the Controlling Function according to the identifier, to request the new POC server performing the Controlling Function to perform the Controlling Function.

604: In response to receiving the switching request, the new POC server performing the Controlling Function returns a switching response to the original POC server performing the Controlling Function.

605: In response to receiving the switching response, the original POC server performing the Controlling Function sends updating requests to all POC servers associated with this service for updating the POC server performing the Controlling Function. The updating request carries the identifier of the new POC server performing the Controlling Function.

606: In response to receiving the updating requests, the POC servers associated with this service updates the POC server performing the Controlling Function according to the identifier carried in the updating request, and send connection establishment requests to the new POC server performing the Controlling Function.

607: In response to receiving the connection establishment requests, the new POC server performing the Controlling Function records the addresses of the POC servers associated with this service, and returns connection establishment responses to the POC servers. The connection establishment responses carry the addresses of the POC servers associated with this service.

608: In response to receiving the connection establishment responses, the POC servers associated with this service return switching complete responses to the original POC server performing the Controlling Function.

609: In response to receiving the switching complete responses, the original POC server performing the Controlling Function stops performing the Controlling Function.

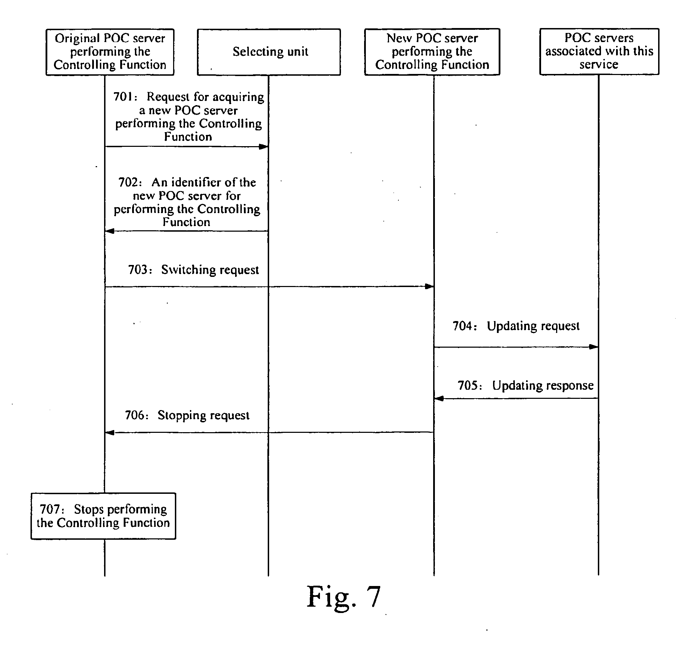

Figure 7 is a flowchart illustrating a change from an original POC server performing the Controlling Function to a new POC server performing the Controlling Function in accordance with another embodiment of the present invention.

701: The original POC server performing the Controlling Function sends to the selecting unit a request message for acquiring a new POC server performing the Controlling Function. The request message carries the session type and the session attributes.

702: In response to receiving the request message for acquiring a new POC server performing the Controlling Function, the selecting unit selects a new POC server performing the Controlling Function according to selecting rules and server attributes stored as well as session information in the request message, and sends an identifier of the new POC server performing the Controlling Function to the original POC server performing the Controlling Function.

703: In response to receiving the identifier of the new POC server performing the Controlling Function, the original POC server performing the Controlling Function sends a switching request to the new POC server performing the Controlling Function according to the identifier, to request the new POC server performing the Controlling Function to perform the Controlling Function. The switching request carries addresses of the POC servers associated with this service.

704: In response to receiving the switching request, the new POC server performing the Controlling Function sends updating requests for updating the POC server performing the Controlling Function to the POC servers associated with this service. The updating requests carry the identifier of the new POC server performing the Controlling Function and address information involved in this session.

705: In response to receiving the updating requests, the POC servers associated with this service update the POC server performing the Controlling Function, and return updating responses to the new POC server performing the Controlling Function.

706: In response to receiving the updating responses, the new POC server performing the Controlling Function returns a stopping request for stopping performing the Controlling Function to the original POC server performing the Controlling Function.

707: In response to receiving the stopping request, the original POC server performing the Controlling Function stops performing the Controlling Function.

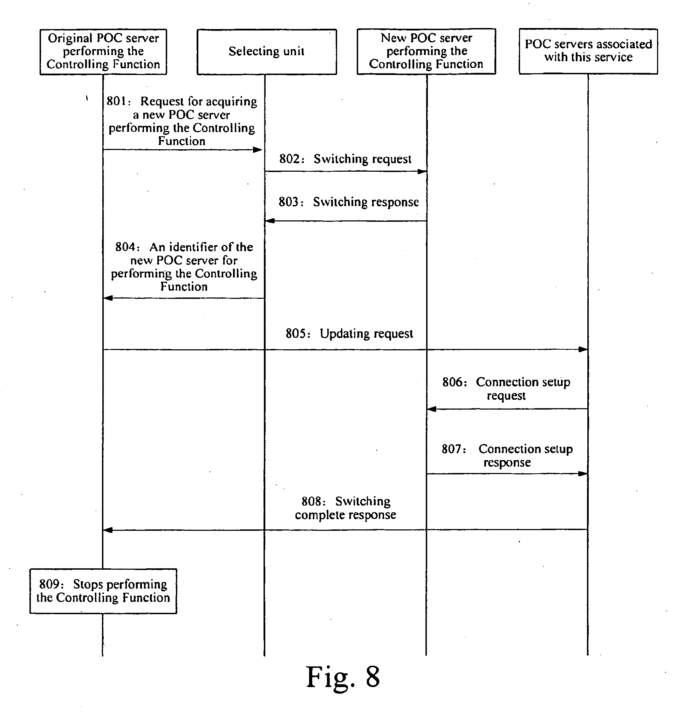

Figure 8 is a flowchart illustrating a change from an original POC server performing the Controlling Function to a new POC server performing the Controlling Function in accordance with another embodiment of the present invention.

In this embodiment, the contents of 801 are the same as those of 601.

However, 802 differs from 602 in that, after selecting a new POC server performing the Controlling Function, the selecting unit directly sends a switching request to the new POC server performing the Controlling Function.

803: In response to receiving the switching request, the new POC server performing the Controlling Function returns a switching response to the selecting unit.

804: In response to receiving the switching response, the selecting unit sends to the original POC server performing the Controlling Function an identifier of the new POC server performing the Controlling Function along with parameters of notifying the new POC server performing the Controlling Function that the switching has been completed.

The contents of 805-809 are the same as those of 605-609.

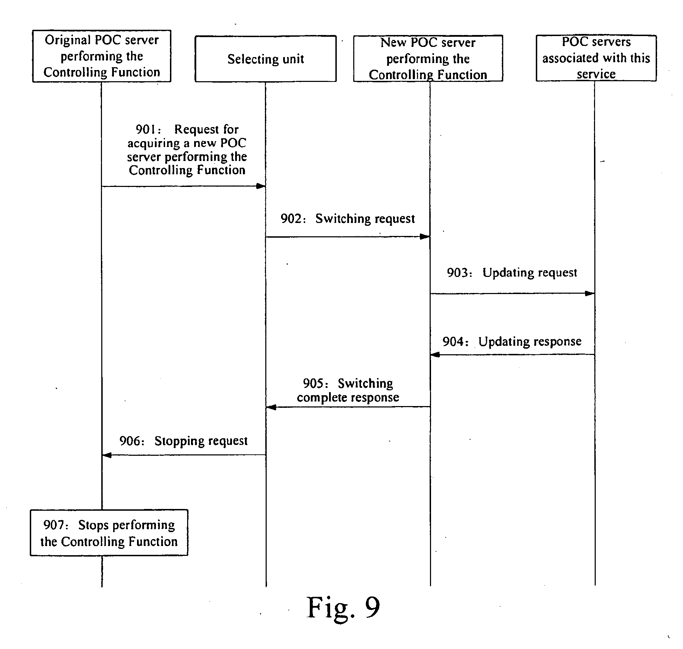

Figure 9 is a flowchart illustrating a change from an original POC server performing the Controlling Function to a new POC server performing the Controlling Function in accordance with another embodiment of the present invention. In comparison with Figure 7, this embodiment is as follows.

The session attributes carried by the request message for acquiring a new POC server performing the Controlling Function in 901 include the addresses of all POC servers associated with this service.

902 differs from 702 in that, in response to selecting a new POC server performing the Controlling Function, the selecting unit directly sends a switching request to the new POC server performing the Controlling Function. The switching request message carries the addresses of all POC servers associated with this service.

The contents of 903-904 are the same as those of 704-705.

905: In response to receiving the updating responses, the new POC server performing the Controlling Function sends a switching complete message to the selecting unit.

906: In response to receiving the switching complete message, the selecting unit sends to the original POC server performing the Controlling Function a stopping request for stopping performing the Controlling Function.

The contents of 907 are the same as those of 707.

As can be seen from the above discussions, when the original POC server performing the Controlling Function finds that a new POC server performing the Controlling Function should be selected, the original POC server performing the Controlling Function sends to the selecting unit a request to request the new POC server performing the Controlling Function. Upon the selection of the new POC server performing the Controlling Function, the original POC server performing the Controlling Function stops performing the Controlling Function and the new POC server performing the Controlling Function performs the Controlling Function for services.

In another embodiment, a POC system is taken as an example, and the selecting rules stored may be:
Rule 1: Service types;
Rule 2: The highest load of POC server being 80%.
Rule 3: Most users being accessed. In other words, in the same condition, the POC server logged in to by the most users in this service is selected as the POC server performing the Controlling Function.

Rule 1 has the highest priority, Rule 2 has the secondary priority and Rule 3 has the lowest priority.

The selecting unit further stores the service types that each POC server can support. In other words, if a POC server does not support the service type of the service requested by a user, the POC server is unable to be selected as the POC server performing the Controlling Function for this session.

After receiving a session establishment request from a user, the POC server performing the Controlling Function for this session.

After receiving a session establishment request from a user, the POC server performing the Controlling Function performs the following:
A: Analyze the service type of the service requested by the user. For example, if the user requests to establish a video service, the POC server only supporting voice service will not be selected.
B: Determine whether the POC servers selected in Block A are overload. Only the POC servers that are not overload can be further selected.
C: Compare the user distribution of the POC servers selected in Block B in this session. At last, the POC server accessed by the most users is selected as the POC server performing the Controlling Function for this session.
The above description of the embodiments of the present invention is provided to enable those skilled in the art to make or use the present invention. Various modifications to these embodiments will be readily apparent to those skilled in the art and generic principles defined herein may be applied to other embodiments without departing from the scope of the invention.

## Claims

1. A method for determining a POC server performing Controlling Function, comprising:
receiving (502), by a selecting unit, a session establishment request from a User Equipment, UE;
selecting (502), by the selecting unit, one POC server as a POC server performing the Controlling Function from a plurality of POC servers associated with the session establishment request according to session information in the session establishment request, server attributes and selecting rules stored in the selecting unit; **characterized by**:
receiving (601, 701, 801, 901), by the selecting unit, a request for acquiring a POC server performing the Controlling Function from the POC server performing the Controlling Function;
selecting, by the selecting unit, a new POC server performing the Controlling Function from the POC servers associated with the session according to the session information, server attributes and selecting rules stored in the selecting unit;
notifying the new POC server performing the Controlling Function and the POC servers associated with the session that updating is to be performed, and
notifying (608, 706, 806, 906) the original POC server performing the Controlling Function that stopping performing the Controlling Function is to be performed.

2. A method according to Claim 1, wherein the selecting rule comprises server load, and the server attributes comprise a highest load of the server;
wherein the selecting (502) one POC server as the POC server performing the Controlling Function from the plurality of POC servers associated with the session establishment request comprises:
selecting a POC server with the lowest load from POC servers the load of which is respectively lower than the highest load preconfigured as the POC server performing the Controlling Function.

3. A method according to Claim 1, wherein the selecting rule comprises service type, server load and user distribution;
wherein the selecting (502) one POC server as the POC server performing the Controlling Function from the plurality of servers associated with the session establishment request comprises:
determining whether the POC servers are able to provide a service required in the session establishment request in turn according to the service type;
determine whether the POC servers which are able to provide the service attain the highest load,
selecting the POC server logged in to by the most users as the POC server performing the Controlling Function from the PoC servers which do not attain the highest load.

4. A method according to any of claims 1 to 3, further comprising:
performing, by the POC server performing Controlling Function, the Controlling Function; and
sending (503), by the POC server performing Controlling Function, the session establishment request and an identifier of the POC server performing Controlling Function to an invited user for establishing the session requested by the session establishment request between the inviting user and the invited user.

5. A method according to Claim 4, further comprising:
receiving, by the POC server performing Controlling Function, session group information of this session; and
performing the Controlling Function according to the session group information.

6. A method according to Claim 4, further comprising:
receiving, by the POC server performing Controlling Function, a session group identifier of this session;
obtaining session group information corresponding to the session group identifier; and
performing the Controlling Function according to the session group information.

7. A method according to Claim 1, wherein the request for acquiring a POC server performing the Controlling Function is sent by the original POC server performing the Controlling Function when the original POC server performing the Controlling Function is unable to support the session, or the original POC server performing the Controlling Function is overload, or the original POC server performing the Controlling Function receives a first switching command from an operator, or the original POC server performing the Controlling Function receives a second switching command from the selecting unit.

8. A method according to Claim 1 or 7, wherein the notifying the new POC server performing the Controlling Function that updating is to be performed comprises:
sending (602), by the selecting unit, an identifier of the new POC server performing the Controlling Function to the original POC server performing the Controlling Function; and
sending (603), by the original POC server performing the Controlling Function, a switching request to the new POC server performing the Controlling Function, and receiving (604) a switching response from the new POC server performing the Controlling Function;
the notifying the POC servers associated with the session that updating is to be performed comprises:
sending (605), by the original POC server performing the Controlling Function, updating requests to the POC servers associated with the session in response to the switching response from the new POC server performing the Controlling Function, wherein the updating requests carry the identifier of the new POC server performing the Controlling Function ; and
establishing (606, 607), by the POC servers associated with the session, connections with the new POC server performing the Controlling Function; and
the notifying the original POC server performing the Controlling Function that stopping performing the Controlling Function is to be performed comprises:
sending (608), by the selecting unit, a switching complete response to the original POC server performing the Controlling Function; and
stopping (609), by the original POC server performing the Controlling Function, performing the Controlling Function.

9. A method according to Claim 1 or 7, wherein the notifying the new POC server performing the Controlling Function that updating is to be performed comprises:
sending (702), by the selecting unit, an identifier of the new POC server performing the Controlling Function to the original POC server performing the Controlling Function; and
sending (703), by the original POC server performing the Controlling Function, a switching request to the new POC server performing the Controlling Function, wherein the switching request carries addresses of the POC servers associated with the session;
the notifying the POC servers associated with the session that updating is to be performed comprises:
sending (704), by the new POC server performing the Controlling Function, updating requests to the POC servers associated with the session, and receiving (705) updating responses from the POC servers associated with the session; and
the notifying the original POC server performing the Controlling Function that stopping performing the Controlling Function is to be performed comprises:
sending (706), by the new POC server performing the Controlling Function, a stopping request to the original POC server performing the Controlling Function; and
stopping (707), by the original POC server performing the Controlling Function, performing the Controlling Function.

10. A method according to Claim 1 or 7, wherein the notifying the new POC server performing the Controlling Function that updating is to be performed comprises:
sending (802), by the selecting unit, a switching request to the new POC server performing the Controlling Function, and receiving (803) a switching response from the new POC server performing the Controlling Function;
the notifying the POC servers associated with the session that updating is to be performed comprises:
sending (804), by the selecting unit, an identifier of the new POC server performing the Controlling Function to the original POC server performing the Controlling Function in response to the switching response;
sending (805), by the original POC server performing the Controlling Function, updating requests to the POC servers associated with the session in response to receiving the identifier of the new POC server performing the Controlling Function; and
establishing (806, 807), by the POC servers associated with the session, connections with the new POC server performing the Controlling Function in response to the updating requests; and
the notifying the original POC server performing the Controlling Function that stopping performing the Controlling Function is to be performed comprises:
sending (808), by the POC servers associated with the session, a switching complete response to the original POC server performing the Controlling Function in response to completing the switching; and
stopping (809), by the original POC server performing the Controlling Function, performing the Controlling Function.

11. A method according to Claim 1 or 7, wherein the notifying the new POC server performing the Controlling Function that updating is to be performed comprises:
sending (902), by the selecting unit, a switching request to the new POC server performing the Controlling Function, wherein the switching request carries addresses of POC servers associated with the session;
the notifying the POC servers associated with the session that updating is to be performed comprises:
sending (903), by the new POC server performing the Controlling Function, updating requests to the POC servers associated with the session, and receiving (904) updating responses from the POC servers associated with the session; and
the notifying the original POC server performing the Controlling Function that stopping performing the Controlling Function is to be performed comprises:
sending (905), by the new POC server performing the Controlling Function, a switching complete message to the selecting unit;
notifying (906), by the selecting unit, the original POC server performing the Controlling Function to stop performing the Controlling Function in response to the switching complete message.

12. A system capable of selecting a POC server performing the Controlling Function, comprising:
a selecting unit and POC servers associated with a session; and
the selecting unit is coupled to the POC servers associated with a session, configured to receive a session establishment request from a User Equipment UE, select one POC server as a POC server performing the Controlling Function from the POC servers associated the session establishment request according to session information in the session establishment request, server attributes and selecting rules stored in the selecting unit, and send the session establishment request to the selected POC server performing the Controlling Function; and, **characterized in that**
the selecting unit is further configured to receive a request for acquiring a new POC server performing the Controlling Function from the POC server performing the Controlling Function, select the new POC server performing the Controlling Function, notify the new POC server performing the Controlling Function and the POC servers associated with the session requested by the session establishment request that updating is to be performed, and notify the original POC server performing the Controlling Function that stopping performing the Controlling Function is to be performed.

13. A system according to claim 12, wherein
the original POC server performing Controlling Function is configured to receive an identifier of the new POC server performing Controlling Function from the selecting unit, and send a switching request to the new POC server performing Controlling Function;
the new POC server performing Controlling Function is configured to receive the switching request, and return a switching response;
the original POC server performing Controlling Function is further configured to send updating requests to the POC servers associated with the session establishment request, wherein the updating requests carry the identifier of the new POC server performing Controlling Function;
the POC servers associated with the session establishment request are configured to establish connections with the new POC server performing Controlling Function and send switching complete messages to the original POC server performing Controlling Function; and
the original POC server performing Controlling Function is further configured to stop performing the Controlling Function in response to the switching complete messages.

14. A system according to claim 12, wherein
the original POC server performing Controlling Function is configured to receive an identifier of the new POC server performing Controlling Function from the selecting unit, and send a switching request to the new POC server performing Controlling Function, wherein the switching request carries addresses of the POC servers associated with the session establishment request;
the new POC server performing Controlling Function is configured to send updating requests to the POC servers associated with the session establishment request;
the POC servers associated with the session establishment request are configured to return updating responses to the new POC server performing Controlling Function;
the new POC server performing Controlling Function is further configured to send a stopping request to the original POC server performing Controlling Function; and
the original POC server performing Controlling Function is further configured to stop performing the Controlling Function after receiving the stopping request.

15. A system according to claim 12, wherein
the selecting unit is configured to send a switching request to the new POC server performing Controlling Function;
the new POC server performing Controlling Function is configured to send a switching response to the selecting unit after receiving the switching request;
the selecting unit is further configured to send an identifier of the new POC server performing Controlling Function to the original POC server performing Controlling Function after receiving the switching response;
the original POC server performing Controlling Function is configured to send updating requests to the POC servers associated with the session establishment request, wherein the updating requests carry the identifier of the new POC server performing Controlling Function;
the POC servers associated with the session establishment request are configured to establish connections with the new POC server performing Controlling Function and send switching complete messages to the original POC server performing Controlling Function; and
the original POC server performing Controlling Function is further configured to stop performing the Controlling Function after receiving the switching complete messages.

16. A system according to claim 12, wherein
the selecting unit is configured to send a switching request to the new POC server performing Controlling Function, wherein the switching request carries addresses of the POC servers associated with the session establishment request;
the new POC server performing Controlling Function is configured to send updating requests to the POC servers associated with the session establishment request;
the POC servers associated with the session establishment request are configured to return updating responses to the new POC server performing Controlling Function; and
the selecting unit is further configured to receive a switching complete message and notify the original POC server performing Controlling Function to stop performing the Controlling Function.

## Patentansprüche

1. Verfahren zum Ermitteln eines POC-Servers, der die Steuerfunktion durchführt, umfassend, dass
durch eine Auswahleinheit eine Sitzungsherstelltingsanforderung von einem Benutzergerät, UE, empfangen wird (502);
durch die Auswahleinheit ein POC-Server als ein POC-Server, der die Steuerfunktion durchführt, aus mehreren POC-Servern, die der Sitzungsherstellungsanforderung zugehörig sind, gemäß einer Sitzungsinformation in der Sitzungsherstellungsanforderung, Server-Attributen und Auswahlregeln, die in der Auswahleinheit gespeichert sind, ausgewählt wird (502);
**dadurch gekennzeichnet, dass**
durch die Auswahleinheit eine Anforderung zum Erlangen eines POC-Servers, der die Steuerfunktion durchführt, von dem POC-Server, der die Steuerfunktion durchführt, empfangen wird (601, 701, 801, 901);
durch die Auswahleinheit ein neuer POC-Server, der die Steuerfunktion durchführt, aus den POC-Servern, die der Sitzung zugehörig sind, gemäß der Sitzungsinformation, den Server-Attributen und den Auswahlregeln, die in der Auswahleinheit gespeichert sind, ausgewählt wird;
der neue POC-Server, der die Steuerfunktion durchführt, und die POC-Server, die der Sitzung zugehörig sind, benachrichtigt werden, dass ein Aktualisieren durchzuführen ist, und
der ursprüngliche POC-Server, der die Steuerfunktion durchführt, benachrichtigt wird, dass ein Stoppen des Durchführens der Steuerfunktion durchzuführen ist (608, 706, 806, 906).

2. Verfahren nach Anspruch 1,
wobei die Auswahlregel eine Server-Auslastung umfasst und die Server-Attribute eine höchste Auslastung des Servers umfassen;
wobei das Auswählen (502) eines POC-Servers als den POC-Server, der die Steuerfunktion durchführt, aus den mehreren POC-Servern, die der Sitzungsherstellungsanforderung zugehörig sind, umfasst, dass
ein POC-Server mit der geringsten Auslastung aus POC-Servern, deren Auslastung jeweils geringer als die vorkonfigurierte höchste Auslastung ist, als der POC-Server, der die Steuerfunktion durchführt, ausgewählt wird.

3. Verfahren nach Anspruch 1,
wobei die Auswahlregel einen Diensttyp, eine Server-Auslastung und eine Benutzerverteilung umfasst;
wobei das Auswählen (502) eines POC-Servers als den POC-Server, der die Steuerfunktion durchführt, aus den mehreren Servern, die der Sitzungsherstellungsanforderung zugehörig sind, umfasst, dass gemäß dem Diensttyp ermittelt wird, ob die POC-Server wiederum in der Lage sind, einen in der Sitzungsherstellungsanforderung angeforderten Dienst bereitzustellen;
ermittelt wird, ob die POC-Server, die den Dienst bereitstellen können, die höchste Auslastung erreichen,
der POC-Server, an dem die meisten Benutzer eingeloggt sind, aus den POC-Servern, die nicht die höchste Auslastung erreichen, als der POC-Server, der die Steuerfunktion durchführt, ausgewählt wird.

4. Verfahren nach einem der Ansprüche 1 bis 3, das ferner umfasst, dass
durch den POC-Server, der die Steuerfunktion durchführt, die Steuerfunktion durchgeführt wird; und
durch den POC-Server, der die Steuerfunktion durchführt, die Sitzungsherstellungsanforderung und ein Identifikator des POC-Servers, der die Steuerfunktion durchführt, an einen eingeladenen Benutzer gesendet werden (503), um die durch die Sitzungsherstellungsanforderung angeforderte Sitzung zwischen dem einladenden Benutzer und dem eingeladenen Benutzer herzustellen.

5. Verfahren nach Anspruch 4, das ferner umfasst, dass
durch den POC-Server, der die Steuerfunktion durchführt, eine Sitzungsgruppeninformation dieser Sitzung empfangen wird; und
die Steuerfunktion gemäß der Sitzungsgruppeninformation durchgeführt wird.

6. Verfahren nach Anspruch 4, das ferner umfasst, dass
durch den POC-Server, der die Steuerfunktion durchführt, ein Sitzungsgruppenidentifikator dieser Sitzung empfangen wird;
eine Sitzungsgruppeninformation, die dem Sitzungsgruppenidentifikator entspricht, erhalten wird; und
die Steuerfunktion gemäß der Sitzungsgruppeninformation durchgeführt wird.

7. Verfahren nach Anspruch 1,
wobei die Anforderung zum Erlangen eines POC-Servers, der die Steuerfunktion durchführt, durch den ursprünglichen POC-Server, der die Steuerfunktion durchführt, gesendet wird, wenn der ursprüngliche POC-Server, der die Steuerfunktion durchführt, die Sitzung nicht unterstützen kann, oder der ursprüngliche POC-Server, der die Steuerfunktion durchführt, überlastet ist, oder der ursprüngliche POC-Server, der die Steuerfunktion durchführt, einen ersten Umschaltbefehl von einem Bediener empfängt, oder der ursprüngliche POC-Server, der die Steuerfunktion durchführt, einen zweiten Umschaltbefehl von der Auswahleinheit empfängt.

8. Verfahren nach Anspruch 1 oder 7,
wobei das Benachrichtigen des neuen POC-Servers, der die Steuerfunktion durchführt, dass ein Aktualisieren durchzuführen ist, umfasst, dass
durch die Auswahleinheit ein Identifikator des neuen POC-Servers, der die Steuerfunktion durchführt, an den ursprünglichen POC-Server, der die Steuerfunktion durchführt, gesendet wird (602); und durch den ursprünglichen POC-Server, der die Steuerfunktion durchführt, eine Umschaltanforderung an den neuen POC-Server, der die Steuerfunktion durchführt, gesendet wird (603) und eine Umschaltantwort von dem neuen POC-Server, der die Steuerfunktion durchführt, empfangen wird (604);
das Benachrichtigen der POC-Server, die der Sitzung zugehörig sind, dass ein Aktualisieren durchzuführen ist, umfasst, dass durch den ursprünglichen POC-Server, der die Steuerfunktion durchführt, in Ansprechen auf die Umschaltantwort von dem neuen POC-Server, der die Steuerfunktion durchführt, Aktualisierungsan-forderungen an die POC-Server, die der Sitzung augehörig sind, gesendet werden (605), wobei die Aktualisierungsanforderungen den Identifikator des neuen POC-Servers, der die Steuerfunktion durchführt, tragen; und
durch die POC-Server, die der Sitzung zugehörig sind, Verbindungen mit dem neuen POC-Server, der die Steuerfunktion durchführt, hergestellt werden (606, 607); und
das Benachrichtigen des ursprünglichen POC-Servers, der die Steuerfunktion durchführt, dass ein Stoppen des Durchführens der Steuerfunktion durchzuführen ist, umfasst, dass
durch die Auswahleinheit eine Umschaltabschlussantwort an den ursprünglichen POC-Server, der die Steuerfunktion durchführt, gesendet wird (608); und
durch den ursprünglichen POC-Server, der die Steuerfunktion durchführt, das Durchführen der Steuerfunktion gestoppt wird (609).

9. Verfahren nach Anspruch 1 oder 7,
wobei das Benachrichtigen des neuen POC-Servers, der die Steuerfunktion durchführt, dass ein Aktualisieren durchzuführen ist, umfasst, dass
durch die Auswahleinheit ein Identifikator des neuen POC-Servers, der die Steuerfunktion durchführt, an den ursprünglichen POC-Server, der die Steuerfunktion durchführt, gesendet wird (702); und durch den ursprünglichen POC-Server, der die Steuerfunktion durchführt, eine Umschaltanforderung an den neuen POC-Server, der die Steuerfunktion durchführt, gesendet wird (703), wobei die Umschaltanforderung Adressen der POC-Server, die der Sitzung zugehörig sind, trägt;
das Benachrichtigen der POC-Server, die der Sitzung zugehörig sind, dass ein Aktualisieren durchzuführen ist, umfasst, dass durch den neuen POC-Server, der die Steuerfunktion durchführt, Aktualisierungsanforderungen an die POC-Server, die der Sitzung zugehörig sind, gesendet werden (704) und Aktualisierungsantworten von den POC-Servern, die der Sitzung zugehörig sind, empfangen werden (705); und
das Benachrichtigen des ursprünglichen POC-Servers, der die Steuerfunktion durchführt, dass ein Stoppen des Durchführens der Steuerfunktion durchzuführen ist, umfasst, dass
durch den neuen POC-Server, der die Steuerfunktion durchführt, eine Stoppanforderung an den ursprünglichen POC-Server, der die Steuerfunktion durchführt, gesendet wird (706); und
durch den ursprünglichen POC-Server, der die Steuerfunktion durchführt, das Durchführen der Steuerfunktion gestoppt wird (707).

10. Verfahren nach Anspruch 1 oder 7,
wobei das Benachrichtigen des neuen POC-Servers, der die Steuerfunktion durchführt, dass ein Aktualisieren durchzuführen ist, umfasst, dass
durch die Auswahleinheit eine Umschaltanforderung an den neuen POC-Server, der die Steuerfunktion durchführt, gesendet wird (802) und eine Umschaltantwort von dem neuen POC-Server, der die Steuerfunktion durchführt, empfangen wird (803);
das Benachrichtigen der POC-Server, die der Sitzung zugehörig sind, dass ein Aktualisieren durchzuführen ist, umfasst, dass durch die Auswahleinheit ein Identifikator des neuen POC-Servers, der die Steuerfunktion durchführt, in Ansprechen auf die Umschaltantwort an den ursprünglichen POC-Server, der die Steuerfunktion durchführt, gesendet wird (804);
durch den ursprünglichen POC-Server, der die Steuerfunktion durchführt, in Ansprechen auf ein Empfangen des Identifikators des neuen POC-Servers, der die Steuerfunktion durchführt, Aktualisierungsanforderungen an die POC-Server, die der Sitzung zugehörig sind, gesendet werden (805); und
durch die POC-Server, die der Sitzung zugehörig sind, in Ansprechen auf die Aktualisierungsanforderungen Verbindungen mit dem neuen POC-Server, der die Steuerfunktion durchführt, hergestellt werden (806, 807); und
das Benachrichtigen des ursprünglichen POC-Servers, der die Steuerfunktion durchführt, dass ein Stoppen des Durchführens der Steuerfunktion durchzuführen ist, umfasst, dass
durch die POC-Server, die der Sitzung zugehörig sind, eine Umschaltabschlussantwort in Ansprechen auf ein Abschließen des Umschaltens an den ursprünglichen POC-Server, der die Steuerfunktion durchführt, gesendet wird (808); und
durch den ursprünglichen POC-Server, der die Steuerfunktion durchführt, das Durchführen der Steuerfunktion gestoppt wird (809).

11. Verfahren nach Anspruch 1 oder 7,
wobei das Benachrichtigen des neuen POC-Servers, der die Steuerfunktion durchführt, dass ein Aktualisieren durchzuführen ist, umfasst, dass
durch die Auswahleinheit eine Umschaltanforderung an den neuen POC-Server, der die Steuerfunktion durchführt, gesendet wird (902),
wobei die Umschaltanforderung Adressen von POC-Servern, die der Sitzung zugehörig sind, trägt;
das Benachrichtigen der POC-Server, die der Sitzung zugehörig sind, dass ein Aktualisieren durchzuführen ist, umfasst, dass durch den neuen POC-Server, der die Steuerfunktion durchführt, Aktualisierungsanforderungen an die POC-Server, die der Sitzung zugehörig sind, gesendet werden (903), und Aktualisierungsantworten von den POC-Servern, die der Sitzung zugehörig sind, empfangen werden (904); und
das Benachrichtigen des ursprünglichen POC-Servers, der die Steuerfunktion durchführt, dass ein Stoppen des Durchführens der Steuerfunktion durchzuführen ist, umfasst, dass
durch den neuen POC-Server, der die Steuerfunktion durchführt, eine Umschaltabschlussnachricht an die Auswahleinheit gesendet wird (905);
der ursprüngliche POC-Server, der die Steuerfunktion durchführt, in Ansprechen auf die Umschaltabschlussnachricht durch die Auswahleinheit benachrichtigt wird (906), um das Durchführen der Steuerfunktion zu stoppen.

12. System, das einen POC-Server, der die Steuerfunktion durchführt, auswählen kann, umfassend:
eine Auswahleinheit und POC-Server, die einer Sitzung zugehörig sind; und
wobei die Auswahleinheit mit den POC-Servern, die einer Sitzung zugehörig sind, gekoppelt ist und ausgestaltet ist, um eine Sitzungsherstellungsanforderung von einem Benutzergerät UE zu empfangen, einen POC-Server als einen POC-Server, der die Steuerfunktion durchführt, aus den POC-Servern, die der Sitzungsherstellungsanforderung zugehörig sind, gemäß einer Sitzungsinformation in der Sitzungsherstellungsanforderung, Server-Attributen und Auswahlregeln, die in der Auswahleinheit gespeichert sind, auszuwählen, und die Sitzungsherstellungsanforderung an den ausgewählten POC-Server, der die Steuerfunktion durchführt, zu senden; und
**dadurch gekennzeichnet, dass**
die Auswahleinheit ferner ausgestaltet ist, um eine Anforderung zum Erlangen eines neuen POC-Servers, der die Steuerfunktion durchführt, von dem POC-Server, der die Steuerfunktion durchführt, zu empfangen, den neuen POC-Server, der die Steuerfunktion durchführt, auszuwählen, den neuen POC-Server, der die Steuerfunktion durchführt, und die POC-Server, die der durch die Sitzungsherstellungsanforderung angeforderten Sitzung zugehörig sind, zu benachrichtigen, dass ein Aktualisieren durchzuführen ist, und den ursprünglichen POC-Server, der die Steuerfunktion durchführt, zu benachrichtigen, dass ein Stoppen des Durchführens der Steuerfunktion durchzuführen ist.

13. System nach Anspruch 12, wobei
der ursprüngliche POC-Server, der die Steuerfunktion durchführt, ausgestaltet ist, um einen Identifikator des neuen POC-Servers, der die Steuerfunktion durchführt, von der Auswahleinheit zu empfangen und eine Umschaltanforderung an den neuen POC-Server, der die Steuerfunktion durchführt, zu senden;
der neue POC-Server, der die Steuerfunktion durchführt, ausgestaltet ist, um die Umschaltanforderung zu empfangen und eine Umschaltantwort zurückzusenden;
der ursprüngliche POC-Server, der die Steuerfunktion durchführt, ferner ausgestaltet ist, um Aktualisierungsanforderungen an die POC-Server, die der Sitzungsherstellungsanforderung zugehörig sind, zu senden, wobei die Aktualisierungsanforderungen den Identifikator des neuen POC-Servers, der die Steuerfunktion durchführt, tragen; die POC-Server, die der Sitzungsherstellungsanforderung zugehörig sind, ausgestaltet sind, um Verbindungen mit dem neuen POC-Server, der die Steuerfunktion durchführt, herzustellen, und Umschaltabschlussnachrichten an den ursprünglichen POC-Server, der die Steuerfunktion durchführt, zu senden; und
der ursprüngliche POC-Server, der die Steuerfunktion durchführt, ferner ausgestaltet ist, um das Durchführen der Steuerfunktion in Ansprechen auf die Umschaltabschlussnachrichten zu stoppen.

14. System nach Anspruch 12, wobei
der ursprüngliche POC-Server, der die Steuerfunktion durchführt, ausgestaltet ist, um einen Identifikator des neuen POC-Servers, der die Steuerfunktion durchführt, von der Auswahleinheit zu empfangen und eine Umschaltanforderung an den neuen POC-Server, der die Steuerfunktion durchführt, zu senden, wobei die Umschaltanforderung Adressen der POC-Server, die der Sitzungsherstellungsanforderung zugehörig sind, trägt;
der neue POC-Server, der die Steuerfunktion durchführt, ausgestaltet ist, um Aktualisierungsanforderungen an die POC-Server, die der Sitzungsherstellungsanforderung zugehörig sind, zu senden;
die POC-Server, die der Sitzungsherstellungsanforderung zugehörig sind, ausgestaltet sind, um Aktualisierungsantworten an den neuen POC-Server, der die Steuerfunktion durchführt, zurückzusenden; der neue POC-Server, der die Steuerfunktion durchführt, ferner ausgestaltet ist, um eine Stoppanforderung an den ursprünglichen POC-Server, der die Steuerfunktion durchführt, zu senden; und der ursprüngliche POC-Server, der die Steuerfunktion durchführt, ferner ausgestaltet ist, um das Durchführen der Steuerfunktion nach dem Empfangen der Stoppanforderung zu stoppen.

15. System nach Anspruch 12, wobei
die Auswahleinheit ausgestaltet ist, um eine Umschaltanforderung an den neuen POC-Server, der die Steuerfunktion durchführt, zu senden;
der neue POC-Server, der die Steuerfunktion durchführt, ausgestaltet ist, um nach dem Empfangen der Umschaltanforderung eine Umschaltantwort an die Auswahleinheit zu senden;
die Auswahleinheit ferner ausgestaltet ist, um nach dem Empfangen der Umschaltantwort einen Identifikator des neuen POC-Servers, der die Steuerfunktion durchführt, an den ursprünglichen POC-Server, der die Steuerfunktion durchführt, zu senden;
der ursprüngliche POC-Server, der die Steuerfunktion durchführt, ausgestaltet ist, um Aktualisierungsanforderungen an die POC-Server, die der Sitzungsherstellungsanforderung zugehörig sind, zu senden, wobei die Aktualisierungsanforderungen den Identifikator des neuen POC-Servers, der die Steuerfunktion durchführt, tragen; die POC-Server, die der Sitzungsherstellungsanforderung zugehörig sind, ausgestaltet sind, um Verbindungen mit dem neuen POC-Server, der die Steuerfunktion durchführt, herzustellen und Umschaltabschlussnachrichten an den ursprünglichen POC-Server, der die Steuerfunktion durchführt, zu senden; und
der ursprüngliche POC-Server, der die Steuerfunktion durchführt, ferner ausgestaltet ist, um das Durchführen der Steuerfunktion nach dem Empfangen der Umschaltabschlussnachrichten zu stoppen.

16. System nach Anspruch 12, wobei
die Auswahleinheit ausgestaltet ist, um eine Umschaltanforderung an den neuen POC-Server, der die Steuerfunktion durchführt, zu senden, wobei die Umschaltanforderung Adressen der POC-Server, die der Sitzungsherstellungsanforderung zugehörig sind, trägt; der neue POC-Server, der die Steuerfunktion durchführt, ausgestaltet ist, um Aktualisierungsanforderungen an die POC-Server, die der Sitzungsherstellungsanforderung zugehörig sind, zu senden; die POC-Server, die der Sitzungsherstellungsanforderung zugehörig sind, ausgestaltet sind, um Aktualisierungsantworten an den neuen POC-Server, der die Steuerfunktion durchführt, zurückzusenden; und
die Auswahleinheit ferner ausgestaltet ist, um eine Umschaltabschlussnachricht zu empfangen und den ursprünglichen POC-Server, der die Steuerfunktion durchführt, zu benachrichtigen, um das Durchführen der Steuerfunktion zu stoppen.

## Revendications

1. Procédé de détermination d'un serveur POC assurant une fonction de commande, comprenant les étapes consistant à :
recevoir (502) sur une unité de sélection une demande d'établissement de session provenant d'un équipement d'utilisateur ;
sélectionner (502) par l'unité de sélection un serveur POC comme serveur POC assurant la fonction de commande, parmi une pluralité de serveurs POC associés à la demande d'établissement de session, sur la base d'informations de session dans la demande d'établissement de session, d'attributs des serveurs et de règles de sélection stockées dans l'unité de sélection ;
**caractérisé par** les étapes consistant à :
recevoir (601, 701, 801, 901) sur l'unité de sélection une demande d'acquisition d'un serveur POC assurant la fonction de commande, en provenance du serveur POC assurant la fonction de commande ;
sélectionner par l'unité de sélection un nouveau serveur POC assurant la fonction de commande parmi les serveurs POC associés à la session, en fonction des informations de session, des attributs des serveurs et des règles de sélection stockées dans l'unité de sélection ;
informer le nouveau serveur POC assurant la fonction de commande et les serveurs POC associés à la session qu'une mise à jour doit se produire ; et
informer (608, 706, 806, 906) le serveur POC original assurant la fonction de commande que l'arrêt de la fonction de commande doit se produire.

2. Procédé selon la revendication 1, dans lequel la règle de sélection inclut la charge du serveur et les attributs des serveurs incluent la charge maximale du serveur ;
dans lequel la sélection (502) d'un serveur POC comme serveur POC assurant la fonction de commande, parmi la pluralité de serveurs POC associés à la demande d'établissement de session comprend l'étape consistant à :
sélectionner comme serveur POC assurant la fonction de commande un serveur POC ayant la charge la plus faible parmi les serveurs POC dont la charge respective est inférieure à la charge maximale configurée.

3. Procédé selon la revendication 1, dans lequel la règle de sélection comprend le type de service, la charge du serveur et la distribution des utilisateurs ;
dans lequel la sélection (502) d'un serveur POC comme serveur POC assurant la fonction de commande, parmi la pluralité de serveurs POC associés à la demande d'établissement de session comprend les étapes consistant à :
déterminer tour à tour si les serveurs POC sont en mesure de fournir un service demandé dans la demande d'établissement de session, en fonction du type de service ;
déterminer si les serveurs POC qui sont en mesure de fournir le service atteignent la charge maximale ;
sélectionner comme serveur POC assurant la fonction de commande le serveur POC sur lequel le maximum d'utilisateurs ont ouvert des sessions, parmi les serveurs POC qui n'atteignent pas la charge maximale.

4. Procédé selon l'une quelconque des revendications 1 à 3, comprenant en outre les étapes consistant à :
assurer la fonction de commande par le serveur POC assurant la fonction de commande ; et
envoyer (503) à un utilisateur invité la demande d'établissement de session et un identificateur du serveur POC assurant la fonction de commande, par le serveur POC assurant la fonction de commande, afin d'établir entre l'utilisateur invitant et l'utilisateur invité la session demandée dans la demande d'établissement de session.

5. Procédé selon la revendication 4, comprenant en outre les étapes consistant à :
recevoir par le serveur POC assurant la fonction de commande des informations de groupe de sessions pour cette session ; et
assurer la fonction de commande en fonction des informations de groupe de sessions.

6. Procédé selon la revendication 4, comprenant en outre les étapes consistant à :
recevoir par le serveur POC assurant la fonction de commande un identificateur de groupe de sessions pour cette session ;
obtenir des informations de groupe de sessions correspondant à l'identificateur de groupe de sessions ; et
assurer la fonction de commande en fonction des informations de groupe de sessions.

7. Procédé selon la revendication 1, dans lequel la demande d'acquisition d'un serveur POC assurant la fonction de commande est envoyée par le serveur POC original assurant la fonction de commande lorsque le serveur POC original assurant la fonction de commande est incapable de supporter la session ou lorsque le serveur POC original assurant la fonction de commande est surchargé ou lorsque le serveur POC original assurant la fonction de commande reçoit une première instruction de commutation d'un opérateur ou lorsque le serveur POC original assurant la fonction de commande reçoit une seconde instruction de commutation de l'unité de sélection.

8. Procédé selon la revendication 1 ou 7, dans lequel l'étape consistant à informer le nouveau serveur POC assurant la fonction de commande qu'une mise à jour doit se produire comprend les étapes consistant à :
envoyer (602) par l'unité de sélection un identificateur du nouveau serveur POC assurant la fonction de commande au serveur POC original assurant la fonction de commande ; et
envoyer (603) par le serveur POC original assurant la fonction de commande une demande de commutation au nouveau serveur POC assurant la fonction de commande et recevoir (604) une réponse de commutation du nouveau serveur POC assurant la fonction de commande ;
dans lequel l'étape consistant à informer les serveurs POC associés à la session qu'une mise à jour doit se produire comprend les étapes consistant à :
envoyer (605), par le serveur POC original assurant la fonction de commande, des demandes de mise à jour aux serveurs POC associés à la session, en réponse à la réponse de commutation du nouveau serveur POC assurant la fonction de commande, les demandes de mise à jour contenant l'identificateur du nouveau serveur POC assurant la fonction de commande ; et
établir (606, 607) par les serveurs POC associés à la session des connexions avec le nouveau serveur POC assurant la fonction de commande ; et
dans lequel l'étape consistant à informer le serveur POC original assurant la fonction de commande que l'arrêt de la fonction de commande doit se produire comprend les étapes consistant à :
envoyer (608) par l'unité de sélection une réponse d'achèvement de commutation au serveur POC original assurant la fonction de commande ; et
cesser (609) d'assurer la fonction de commande par le serveur POC original assurant la fonction de commande.

9. Procédé selon la revendication 1 ou 7, dans lequel l'étape consistant à informer le nouveau serveur POC assurant la fonction de commande qu'une mise à jour doit se produire comprend les étapes consistant à :
envoyer (702), par l'unité de sélection, un identificateur du nouveau serveur POC assurant la fonction de commande au serveur POC original assurant la fonction de commande ; et
envoyer (703) par le serveur POC original assurant la fonction de commande une demande de commutation au nouveau serveur POC assurant la fonction de commande, la demande de commutation comprenant les adresses des serveurs POC associés à la session ;
dans lequel l'étape consistant à informer les serveurs POC associés à la session qu'une mise à jour doit se produire comprend les étapes consistant à :
envoyer (704), par le nouveau serveur POC assurant la fonction de commande, des demandes de mise à jour aux serveurs POC associés à la demande et recevoir (705) des réponses de mise à jour des serveurs POC associés à la session ; et
dans lequel l'étape consistant à informer le serveur POC original assurant la fonction de commande que l'arrêt de la fonction de commande doit se produire comprend les étapes consistant à :
envoyer (706) par le nouveau serveur POC assurant la fonction de commande une demande d'arrêt au serveur POC original assurant la fonction de commande ; et
cesser (707) d'assurer la fonction de commande par le serveur POC original assurant la fonction de commande.

10. Procédé selon la revendication 1 ou 7, dans lequel l'étape consistant à informer le nouveau serveur POC assurant la fonction de commande qu'une mise à jour doit se produire comprend les étapes consistant à :
envoyer (802) par l'unité de sélection une demande de commutation au nouveau serveur POC assurant la fonction de commande et recevoir (803) une réponse de commutation du nouveau serveur POC assurant la fonction de commande ;
dans lequel l'étape consistant à informer les serveurs POC associés à la session qu'une mise à jour doit se produire comprend les étapes consistant à :
envoyer (804), par l'unité de sélection, un identificateur du nouveau serveur POC assurant la fonction de commande au serveur POC original assurant la fonction de commande, après avoir reçu la réponse de commutation ;
envoyer (805), par le serveur POC original assurant la fonction de commande, des demandes de mise à jour aux serveurs POC associés à la session à la suite de la réception de l'identificateur du nouveau serveur POC assurant la fonction de commande ; et
établir (806, 807) par les serveurs POC associés à la session, des connexions avec le nouveau serveur POC assurant la fonction de commande en réponse aux demandes de mise à jour ; et
dans lequel l'étape consistant à informer le serveur POC original assurant la fonction de commande que l'arrêt de la fonction de commande doit se produire comprend les étapes consistant à :
envoyer (808) par les serveurs POC associés à la session une réponse d'achèvement de commutation au serveur POC original assurant la fonction de commande, après avoir achevé la commutation ; et
cesser (809) d'assurer la fonction de commande par le serveur POC original assurant la fonction de commande.

11. Procédé selon la revendication 1 ou 7, dans lequel l'étape consistant à informer le nouveau serveur POC assurant la fonction de commande qu'une mise à jour doit se produire comprend l'étape consistant à :
envoyer (902), par l'unité de sélection, une demande de commutation au nouveau serveur POC assurant la fonction de commande, la demande de commutation comprenant des adresses des serveurs POC associés à la session ;
dans lequel l'étape consistant à informer les serveurs POC associés à la session qu'une mise à jour doit se produire comprend les étapes consistant à :
envoyer (903), par le nouveau serveur POC assurant la fonction de commande, des demandes de mise à jour aux serveurs POC associés à la session et recevoir (904) des réponses de mise à jour des serveurs POC associés à la session ; et
dans lequel l'étape consistant à informer le serveur POC original assurant la fonction de commande que l'arrêt de la fonction de commande doit se produire comprend les étapes consistant à :
envoyer (905) à l'unité de sélection un message d'achèvement de commutation par le nouveau serveur POC assurant la fonction de commande ;
informer (906) le serveur POC original assurant la fonction de commande, par l'unité de sélection, de cesser d'assurer la fonction de commande, en réponse au message d'achèvement de la commutation.

12. Système capable de sélectionner un serveur POC assurant la fonction de commande, comprenant :
une unité de sélection et des serveurs POC associés à la session ; et
dans lequel l'unité de sélection est couplée aux serveurs POC associés à une session et est configurée pour recevoir une demande d'établissement de session d'un équipement d'utilisateur, pour sélectionner un serveur POC comme serveur POC assurant la fonction de commande parmi les serveurs POC associés à la demande d'établissement de session, sur la base d'informations de session dans la demande d'établissement de session, d'attributs des serveurs et de règles de sélection stockées dans l'unité de sélection et pour envoyer la demande d'établissement de session au serveur POC assurant la fonction de commande sélectionné ;
**caractérisé en ce que :**
l'unité de réception est en outre configurée pour recevoir une demande d'acquisition d'un nouveau serveur POC assurant la fonction de commande, en provenance du serveur POC assurant la fonction de commande, pour sélectionner le nouveau serveur POC assurant la fonction de commande, pour informer le nouveau serveur POC assurant la fonction de commande et les serveurs POC associés à la session, demandés dans la demande d'établissement de session, qu'une mise à jour doit se produire et pour informer le serveur POC original assurant la fonction de commande que l'arrêt de la fonction de commande doit se produire.

13. Système selon la revendication 12, dans lequel :
le serveur POC original assurant la fonction de commande est configuré pour recevoir de l'unité de sélection un identificateur du nouveau serveur POC assurant la fonction de commande et pour envoyer une demande de commutation au nouveau serveur POC assurant la fonction de commande ;
le nouveau serveur POC assurant la fonction de commande est configuré pour recevoir la demande de commutation et pour renvoyer une réponse de commutation ;
le serveur POC original assurant la fonction de commande est en outre configuré pour envoyer des demandes de mise à jour aux serveurs POC associés à la demande d'établissement de session, les demandes de mise à jour comprenant l'identificateur du nouveau serveur POC assurant la fonction de commande ;
les serveurs POC associés à la demande d'établissement de session sont configurés pour établir des connexions avec le nouveau serveur POC assurant la fonction de commande et pour envoyer des messages d'achèvement de commutation au serveur POC original assurant la fonction de commande ; et
le serveur POC original assurant la fonction de commande est en outre configuré pour cesser d'assurer la fonction de commande en réponse aux messages d'achèvement de commutation.

14. Système selon la revendication 12, dans lequel :
le serveur POC original assurant la fonction de commande est configuré pour recevoir de l'unité de sélection un identificateur du nouveau serveur POC assurant la fonction de commande et pour envoyer une demande de commutation au nouveau serveur POC assurant la fonction de commande, la demande de commutation comportant des adresses des serveurs POC associés à la demande d'établissement de session ;
le nouveau serveur POC assurant la fonction de commande est configuré pour envoyer des demandes de mise à jour aux serveurs POC associés à la demande d'établissement de session ;
les serveurs POC associés à la demande d'établissement de session sont configurés pour renvoyer des réponses de mise à jour au nouveau serveur POC assurant la fonction de commande ;
le nouveau serveur POC assurant la fonction de commande est en outre configuré pour envoyer une demande d'arrêt au serveur POC original assurant la fonction de commande ; et
le serveur POC original assurant la fonction de commande est en outre configuré pour cesser d'assurer la fonction de commande à réception de la demande d'arrêt.

15. Système selon la revendication 12, dans lequel :
l'unité de sélection est configurée pour envoyer une demande de commutation au nouveau serveur POC assurant la fonction de commande ;
le nouveau serveur POC assurant la fonction de commande est configuré pour envoyer une réponse de commutation à l'unité de sélection après avoir reçu la demande de commutation ;
l'unité de sélection est en outre configurée pour envoyer un identificateur du nouveau serveur POC assurant la fonction de commande au serveur POC original assurant la fonction de commande, après réception de la réponse de commutation ;
le serveur POC original assurant la fonction de commande est configuré pour envoyer des demandes de mise à jour aux serveurs POC associés à la demande d'établissement de session, les demandes de mise à jour comportant l'identificateur du nouveau serveur POC assurant la fonction de commande ;
les serveurs POC associés à la demande d'établissement de session sont configurés pour établir des connexions avec le nouveau serveur POC assurant la fonction de commande et pour envoyer des messages d'achèvement de commutation au serveur POC original assurant la fonction de commande ; et
le serveur POC original assurant la fonction de commande est en outre configuré pour cesser d'assurer la fonction de commande après réception des messages d'achèvement de commutation.

16. Système selon la revendication 12, dans lequel :
l'unité de sélection est configurée pour envoyer une demande de commutation au nouveau serveur POC assurant la fonction de commande, la demande de commutation comportant des adresses des serveurs POC associés à la demande d'établissement de session ;
le nouveau serveur POC assurant la fonction de commande est configuré pour envoyer des demandes de mise à jour aux serveurs POC associés à la demande d'établissement de session ;
les serveurs POC associés à la demande d'établissement de session sont configurés pour renvoyer des réponses de mise à jour au nouveau serveur POC assurant la fonction de commande ; et
l'unité de sélection est en outre configurée pour recevoir un message d'achèvement de commutation et pour informer le serveur POC original assurant la fonction de commande de cesser d'assurer la fonction de commande.
